# EUROPÄISCHE PATENTSCHRIFT

(11) **EP 2 682 424 B1**
(45) Veröffentlichungstag und Bekanntmachung des Hinweises auf die Patenterteilung: **04.03.2015**
(21) Anmeldenummer: 13175262.8
(22) Anmeldetag: 05.07.2013
(51) Int. Cl.: C08L 23/04, C08L 23/10

(54) **Verwendung einer Polymerzusammensetzung**
Use of a polymer composition
Utilisation d'une composition polymère

(30) Priorität: 06.07.2012 DE 102012106061
(43) Veröffentlichungstag der Anmeldung: 08.01.2014
(73) Patentinhaber: REHAU AG + Co, 95111 Rehau (DE)
(72) Erfinder: Kania, Guido, 91080 Marloffstein (DE)

(56) Entgegenhaltungen:
- EP-A1- 1 146 273
- DE-U1-202010 017 052
- JP-A- H10 230 555
- US-B1- 6 437 048

## Beschreibung

Die vorliegende Erfindung betrifft die Verwendung einer Polymer-Zusammensetzung zur Herstellung eines Rohres oder Rohrformteils, insbesondere zur Extrusion eines Rohres, sowie ein Rohr oder Rohrformteil, das unter Verwendung einer derartigen Polymer-Zusammensetzung erhalten worden ist.

Im Stand der Technik bekannte Rohre oder Rohrformteil werden aus Polymer-Zusammensetzungen erhalten. Ziel ist es, eine möglichst glatte Oberfläche der Rohre oder Rohrformteile zu erhalten, um zu gewährleisten, dass die Rohre oder Rohrformteile einfach und sicher verlegbar sind.

Rohrleitungen aus Polymermaterial werden häufig zur Wärmeübertragung von einem Fluid, das die Rohrleitung durchströmt, an ein Bauteil eingesetzt.
Eine andere Anwendungsmöglichkeit ergibt sich dadurch, dass Rohrleitungen aus Polymermaterial in aushärtenden mineralischen Massen, wie beispielsweise Beton, Zement, Putz, Bentonit oder Estrich, verlegt werden.
Dies ist besonders häufig im Rahmen von Wohnhäusern und Industriegebäuden anzutreffen.

Weiterhin werden Rohrleitungen aus Polymermaterial häufig auch im Erdreich verlegt, um dort beispielsweise Erdwärme zu gewinnen oder aber Wärmeenergie in den Erdboden einzuspeisen.

Hieraus ergeben sich typische Anwendungsfälle, wie beispielsweise Fußbodenheizungen bzw. Fußbodenkühlungen, Wand- oder Deckenheizungen und entsprechende Kühlungen, Betonkerntemperierungen, Rohrdurchführungen durch Wände, wie beispielsweise Hauseinführungen, Geothermiesonden, die vertikal oder schräg gebohrt sind, horizontale Erdkollektoren, Fermenterheizungen, Industrierohranlagen, etc..

Insbesondere beim Verlegen von polymeren Rohrleitungen in aushärtenden mineralischen Massen, wie beispielsweise Beton, Zement, Putz, Bentonit oder Estrich, kommt es mit dem Abbinden, also dem Verfestigen dieser Massen, meist zu einer Volumenreduktion, wobei diese Massen schwinden.

Da diese Massen an der Oberfläche der Rohrleitungen aus Polymermaterial schlecht anhaften, da diese glatt und hydrophob sind, entsteht dabei sehr häufig ein Ringspalt zwischen der ausgehärteten, oftmals geschwundenen Masse und der Oberfläche des Rohres aus Polymermaterial.

Dieser Ringspalt bringt eine Reihe von Nachteilen mit sich.
So ist zum einen die Wärmebertragung vom im Rohr geförderten Fluid zu der mineralischen Masse bzw. von der mineralischen Masse zum im Rohr strömenden Fluid erheblich behindert.
Andererseits ist die Dichtigkeit, mit der das Rohr aus Polymermaterial in der mineralischen Masse eingebettet ist, deutlich verringert.
Weiterhin kann dieser Spalt zwischen mineralischer Masse und Rohr aus Polymermaterial im Sinne eines durchgehenden offenen Kanals den Zutritt von Wasser bzw. Feuchtigkeit zu der ausgehärteten Masse begünstigen. Wenn dort Bewehrungsstellen, Anker oder sonstige Befestigungselemente eingebracht sind, wird deren Korrosion auf diese Weise massiv gefördert.

JP-H-10230555 offenbart Rohre für Heizungsleitungen mit einer Aussenschicht aus EVOH mit Teilchen einer Teilchengrösse von 0.2-1.2 µm, einer Innenschicht aus Silan vernetztem PE und einer Klebeschicht

EP-A-1146273 offenbart ein mehrschichtiges Rohr mit einer Aussenschicht aus EVOH und mehtschichtigen Acrylatpolymer Partikeln einer Partikelgrösse von <0.2 µm.

US-B-6437048 offenbart Zusammensetzungen aus Polypropylene das Polyethylen Teilchen enthält. Die Zusammensetzung kann für Rohre verwendet werden.

DE-U-202010017052 offenbart Rohre mit einer Innenschicht aus Polypropylen und Particeln von UHMWPE (Partikel Grösse 30-120 µm und MbS₂

Vor diesem Hintergrund liegt der vorliegenden Erfindung die Aufgabe zugrunde, die Verwendung einer Polymer-Zusammensetzung zur Herstellung von Rohren oder Rohrformteilen und entsprechende Rohre oder Rohrformteile zur Verfügung zu stellen, der die Nachteile des Standes der Technik überwinden.

Insbesondere soll gemäß der vorliegenden Erfindung die Fähigkeit, die Rohre oder Rohrformteile an aushärtende mineralische Massen anzubinden, verbessert sein.

Diese und andere Aufgaben werden durch die Verwendung einer Polymer-Zusammensetzung mit den Merkmalen des Anspruches 1 bzw. durch Rohre oder Rohrformteile mit den Merkmalen des Patentanspruchs 6 gelöst. Bevorzugte Ausführungsformen der vorliegenden Erfindung sind in den jeweils davon abhängigen Ansprüchen beschrieben.

Gemäß der vorliegenden Erfindung wurde überraschenderweise erkannt, dass ein in Bezug auf die geschilderten Nachteiles von Rohren oder Rohrformteilen gemäß des Standes der Technik dann eine verbesserte Anbindung an mineralische aushärtende Massen erhalten wird, wenn der zur Herstellung der Rohre oder Rohrformteile verwendeten Polymer-Zusammensetzung neben dem Polymer auch Polymerpartikel in einer Menge von 5 Gewichtsteil bis 45 Gewichtsteilen, bezogen auf das Gesamtgewicht des Polymers und der Polymerpartikel, werden, wobei die Polymer-Zusammensetzung zur Herstellung wenigstens einer Außenschicht einer Wandung eines Rohres oder Rohrformteils eingesetzt wird.

Der verbesserte Anbindungseffekt wird bei einem Anteil der Polymerpartikel unterhalb von 5 Gewichtsteil nicht mehr beobachtet, während ein Anteil der Polymerpartikel von mehr als 45 Gewichtsteilen zu einer verringerten Festigkeit der erfindungsgemäßen Rohre oder Rohrformteile führt.

Dementsprechend liegt die vorliegende Erfindung in der Verwendung einer Polymer-Zusammensetzung, die
(A) 55 Gewichtsteile bis 95 Gewichtsteile, bezogen auf das Gesamtgewicht der Komponenten (A) und (B), eines Polymers (5);
(B) 5 Gewichtsteile bis 45 Gewichtsteile Polymerpartikel (6), bezogen auf das Gesamtgewicht der Komponenten (A) und (B), mit einem mittleren Partikeldurchmesser von 10 µm bis 250 µm; und ggf.
(C) übliche Zusatzstoffe
   zur Herstellung wenigstens einer Außenschicht einer Wandung (2) eines Rohres oder Rohrformteils (1), wobei die Polymerpartikel (6) an der Oberfläche (4) der Wandung (2) des Rohres oder Rohrformteils (1) derartig angeordnet sind, dass sie sich über die Oberfläche (4) nach außen hinaus erheben.
zur Herstellung wenigstens einer Außenschicht einer Wandung eines Rohres oder Rohrformteils, sowie von Rohren oder Rohrformteilen, bei denen die Außenschicht einer Wandung aus einer solchen Polymer-Zusammensetzung erhalten worden ist, zugrunde.

Die hierin beschriebenen Gewichtsanteile sind in Gewichtsteilen oder Gew.-% angegeben und beziehen sich jeweils auf das Gesamtgewicht des Komponenten (A) und (B) als 100 Gewichtsteile bzw. 100 Gew.-%.

Als bevorzugte Materialien für das Polymer der Komponente (A) in der erfindungsgemäß verwendeten Polymer-Zusammensetzung haben sich thermoplastische Polymere wie Polyethylen (PE) oder Polypropylen (PP) oder ein Copolymeres des Polyethylens (PE) oder des Polypropylens (PP) oder Ethylvinylalkohol (EVOH) oder ein Gemisch aus Ethylvinylalkohol (EVOH) und Polyethylen (PE) oder ein maleinsäureanhydrid-gepfropftes Polyethylen (PE-MAH) oder ein maleinsäureanhydrid-gepfropftes Polypropylen (PP-MAH) sowie Gemische, Copolymere und Blends der genannten Polymere aus Gründen ihres bevorzugten Einsatzes zur Extrusion oder zur Spritzgussherstellung von Rohren oder Rohrformteilen erwiesen, wobei Polypropylen besonders bevorzugt ist.

Als Materialien der Polymerpartikel der Komponente (B) sind ultrahochmolekulares Polyethylen (PE-UHMW) oder vernetztes Polyethylen (PE-X) bevorzugt, wobei insbesondere vernetzte Polymerpartikel aus dem Polymer des Polymermaterials der Komponente (A) aufgrund der jeweils guten Verträglichkeit mit dem Hauptmaterial der Polymer-Zusammensetzung besonders bevorzugt sind.

Hinsichtlich der Menge der Polymerpartikel der Komponente (A) ist eine Menge von 5 Gewichtsteilen bis 45 Gewichtsteilen bezogen auf das Gesamtgewicht der Komponenten (A) und (B) insgesamt, in der Polymer-Zusammensetzung bevorzugt. Dementsprechend beträgt der Anteil des Polymers der Komponente (A) vorzugsweise 55 Gewichtsteile bis 95 Gewichtsteile, bezogen auf das Gesamtgewicht der Komponenten (A) und (B) insgesamt, in der Polymer-Zusammensetzung. Liegt der Gewichtsanteil der Polymerpartikel der Komponente (B) innerhalb dieser Grenzen, wird eine besonders günstige Anbindung an mineralische aushärtende Massen erreicht.

Erfindungsgemäß weisen die Polymerpartikel der Komponente (B) einen mittleren Partikeldurchmesser von 10 µm bis 250 µm auf.
Hinsichtlich des mittleren Partikeldurchmessers der Polymerpartikel der Komponente (B) ist es bevorzugt, dass dieser 50 µm bis 200 µm beträgt. Innerhalb dieses Bereichs wird ein besonders guter Anbindungseffekt an der Oberfläche eines solchen Rohres oder Rohrformteils erzielt.
Ein mittlerer Partikeldurchmesser im Bereich von 80 µm bis 150 µm ist besonders bevorzugt. Hierbei resultiert ein ganz besonders starker Anbindungseffekt an der Oberfläche. Komponente (C) beschreibt übliche Zusatzstoffe, die in der erfindungsgemäß verwendeten Polymer-Zusammensetzung in wirksamen Mengen vorhanden sein können. Als übliche Zusatzstoffe können beispielsweise Verarbeitungsstabilisatoren (in einer Menge von 0,6 Gewichtsteilen bis 5 Gewichtsteilen, vorzugsweise etwa 2,5 Gewichtsteile; vorzugsweise Wärmestabilisatoren, vorzugsweise aus der Gruppe der Phosphite, und / oder UV-Stabilisatoren, und dergleichen), Gleitmittel (vorzugsweise in einer Menge von 0,01 Gewichtsteilen bis 3 Gewichtsteilen, insbesondere bevorzugt etwa 0,3 Gewichtsteile; beispielsweise Polyethylen- oder Polypropylenwachse, Esterwachse von Glykolen, Glycerin, Penta- und Dipentaerythrit oder anderen Polyolen mit geeigneten Carbonsäuren, Montanwachse, Paraffinwachse, Metallseifen und dergleichen), Pigmente (vorzugsweise in einer Menge von 0,01 Gewichtsteilen bis 6 Gewichtsteilen; beispielsweise Titandioxid, Calciumsulfat, Ultramarinblau, Ruße und dergleichen), polymere Verarbeitungshilfsstoffe (vorzugsweise in einer Menge von 0,1 Gewichtsteilen bis 2,5 Gewichtsteilen, besonders bevorzugt etwa 1,2 Gewichtsteile; beispielsweise Methylmethacrylat-Polymere und Copolymere), Strukturierungsmittel (in beliebigen Mengen; beispielsweise Glaskugeln, Epoxidharze, Acrylatharze und dergleichen), anorganische Füllstoffe oder Verstärkungsmittel (in einer Menge von 2 Gewichtsteilen bis 40 Gewichtsteilen, vorzugsweise etwa 15 Gewichtsteile; beispielsweise Kreide, Kalkstein, Marmor, Talkum, gefälltes Calciumcarbonat und dergleichen), Antistatika, UV-Absorber, Effektpigmente und dergleichen genannt werden. Darüber hinaus sind die wirksamen Mengen der möglichen Zusatzstoffe der Komponente (C) dem Fachmann bekannt. Die voranstehenden Gewichtsanteile beziehen sich wiederum jeweils auf die Summe der Komponenten (A) und (B) in der erfindungsgemäß verwendeten Polymer-Zusammensetzung als 100 Gewichtsteile.

Die vorstehenden Ausführungen hinsichtlich der Materialen für die Komponente (A) und (B), der Gewichtsanteile der Komponenten (A) und (B), des mittleren Partikeldurchmessers der Polymerpartikel gemäß Komponente (B) sowie der üblichen Zusatzstoffe der Komponente (C) beziehen sich sowohl auf die erfindungsgemäße Verwendung der Polymer-Zusammensetzung als auch auf die erfindungsgemäßen Rohre und Rohrformteile.

Die erfindungsgemäß verwendete Polymer-Zusammensetzung kann durch Mischen der Komponenten (A), (B) und ggf. (C) erfolgen. Dies geschieht zweckmäßigerweise entweder unmittelbar vor der Verarbeitung durch Vermischen der festen, pulverförmigen Komponenten (A), (B) und (C) der Polymer-Zusammensetzung in dem Fachmann geläufigen, marktüblichen Mischvorrichtungen oder in einem separaten Aufbereitungsschritt im Rahmen der Compoundherstellung. Bevorzugt werden die erfindungsgemäß verwendeten Polymer-Zusammensetzungen durch Extrudieren in marktüblichen Extrudern in dem Fachmann an sich bekannter Art und Weise zu Rohren und Rohrformteilen verarbeitet. Eine andere Fertigungstechnik ist das Spritzgießen und das Rotationsformen, womit ebenfalls Rohre und Rohrformteile zugänglich sind.

Die auf diese Weise erhaltenen Rohre und Rohrformteile weisen eine matte, strukturierte Oberfläche auf und besitzen eine verbesserte Anbindung an mineralische aushärtende Massen.
Während eines derartigen Extrusionsprozesses bleiben die Polymerpartikel der Komponente (B) vorzugsweise ungeschmolzen.

Die Erfindung umfasst auch das Rohr oder Rohrformteil mit einer wenigstens aus einer Außenschicht gebildeten Wandung, geformt aus einer Polymerzusammensetzung, umfassend
(A) 55 Gewichtsteile bis 95 Gewichtsteile, bezogen auf das Gesamtgewicht der Komponenten (A) und (B), eines Polymers (5);
(B) 5 Gewichtsteile bis 45 Gewichtsteile Polymerpartikel (6), bezogen auf das Gesamtgewicht der Komponenten (A) und (B), mit einem mittleren Partikeldurchmesser von 10 µm bis 250 µm; und ggf.
(C) übliche Zusatzstoffe,
wobei die Polymerpartikel (6) an der Oberfläche (4) der Wandung (2) des Rohres oder Rohrformteils (1) derartig angeordnet sind, dass sie sich über die Oberfläche (4) nach außen hinaus erheben.

In einer vorteilhaften Ausbildung der Erfindung kann das Rohr oder Rohrformteil (1) derart gebildet sein, dass das Polymer der Komponente (A) Polyethylen (PE) oder Polypropylen (PP) oder ein Copolymeres des Polyethylens (PE) oder des Polypropylens (PP) oder ultrahochmolekulares Polyethylen oder vernetztes Polyethylen (PE-X) oder Ethylvinylalkohol (EVOH) oder ein Gemisch aus Ethylvinylalkohol (EVOH) und Polyethylen (PE) oder ein maleinsäureanhydrid-gepfropftes Polyethylen (PE-MAH) oder ein maleinsäureanhydrid-gepfropftes Polypropylen (PP-MAH) enthält oder ist und/oder die Polymerpartikel (6) der Komponente (B) ultrahochmolekulares Polyethylen (PE-UHMW) oder vernetztes Polyethylen (PE-X) enthalten oder daraus bestehen.

In einer weiteren bevorzugten Ausbildung der Erfindung kann vorgesehen sein, dass die Polymerpartikel der Komponente (B) in einer Menge von 5 Gewichtsteilen bis 45 Gewichtsteilen, bezogen auf das Gesamtgewicht der Komponenten (A) und (B), in der Polymer-Zusammensetzung enthalten sind.

In einer besonders günstigen Ausbildung der Erfindung kann vorgesehen sein, dass die

Polymerpartikel der Komponente (B) in einer Menge von 10 Gewichtsteilen bis 30 Gewichtsteilen, bezogen auf das Gesamtgewicht der Komponenten (A) und (B), in der Polymer-Zusammensetzung enthalten sind.

Eine weitere bevorzugte Ausbildung der Erfindung umfasst ein Rohr oder Rohrformteil, bei dem der mittlere Partikeldurchmesser der Polymerpartikel der Komponente (B) 50 µm bis 200 µm, insbesondere 80 µm bis 150 µm, beträgt.

Es gelingt mit den erfindungsgemäßen Rohren oder Rohrformteilen, diese in mineralische aushärtende Massen derart einzubetten, dass nach dem Aushärten der mineralischen Masse diese spaltfrei oder zumindest überwiegend spaltfrei an der Oberfläche der Wandung der Rohre oder Rohrformteile anliegt.
Damit ist dann in einer Art Labyrinthdichtung ein Leiten von Wasser oder Feuchtigkeit zwischen der Oberfläche des Rohres oder Rohrformteils und der anliegenden ausgehärteten Masse praktisch nicht mehr möglich.

Das Rohr oder Rohrformteil ist in der ausgehärteten mineralischen Masse kraftschlüssig angeordnet, so dass Ausdehnungseffekte, die sich bei den Rohren oder Rohrformteilen dann ergeben, wenn diese beispielsweise bei einer Temperaturänderung des sie durchströmenden Fluids entsprechend erhitzt oder abgekühlt werden, nicht mehr auftreten. Dadurch lassen sich Bewegungen der Rohre oder Rohrformteile in der ausgehärteten Masse unter dem Einfluß von Temperaturänderungen vermeiden.

Damit einher geht auch ein verbessernder Kontakt, insbesondere ein verbesserter Wärmeübertragungskontakt zwischen der Wandung des Rohres oder Rohrformteils und der anliegenden ausgehärteten mineralischen Masse.

Dieser verbesserte Wärmeübergang ist insbesondere bei Erdwärmesonden-Rohranordnungen wichtig, da damit die Effizienz derartiger Anlagen deutlich gesteigert werden kann.

Bei Erdwärmesonden-Rohranordnungen kommt als weiterer Effekt hinzu, dass durch die bereits geschilderte Dichtigkeit gegen die Leitung von Längswasser entlang der Rohroberfläche das erforderliche Trennen der verschiedenen Grundwasserhorizonte (Aquifere) im Erdboden in einem mit einer mineralischen aushärtenden Masse ausgefüllten Bohrloch dann mit hoher Sicherheit bewerkstelligt werden kann.

Die Erfindung bringt es auch mit sich, dass beim Einbetten der Rohre oder Rohrformteile in aushärtende mineralische Massen nach der Aushärtung erhöhte Auszugskräfte resultieren, was bei Verlegearbeiten dieser Rohre oder Rohrformteile von Vorteil ist.

Daneben bieten die erfindungsgemäßen Rohre oder Rohrformteile auch ein verbessertes Handling.
Durch die Rauheit der Oberfläche der Rohre oder Rohrformteile gemäß vorliegender Erfindung liegt eine verminderte Gleitreibung vor, was beispielsweise das Einbringen des Rohres in das Bohrloch einer Erdwärmesondenbohrung erleichtert, indem dieses besser kontrolliert werden kann.

Auch bei der Fixierung der erfindungsgemäßen Rohre oder Rohrformteile in den Aufnahmen beispielsweise einer Noppenplatte zur Herstellung einer Fußbodenheizung ist die vorliegende Erfindung hilfreich, da sich die Rohre lassen in diese Aufnahmen sicherer festlegen lassen.

Es liegt im Rahmen der vorliegenden Erfindung, dass das erfindungsgemäße Rohr oder Rohrformteil noch weitere Schichten, und insbesondere Funktionsschichten aufweisen kann, die zumindest einen Teil der Wandung bilden.
Es kann sich dabei um eine diffusionsreduzierende Schicht oder mehrere solcher Schichten handeln, weiterhin sind Verschleißschutzschichten vorteilhaft anzuordnen, die beispielsweise als dünne Schicht ausgebildet die äußerste Schicht des Rohres oder Rohrformteils darstellt und beispielsweise beim Einbau des Rohres vorteilhaft genutzt werden kann. Darüber hinaus sind Markierungsschichten und Indikatorschichten in einer günstigen Ausbildung der Erfindung vorsehbar, womit Informationen übermittelbar sind.

So ist es beispielsweise möglich, im Rahmen der vorliegenden Erfindung ein Rohr zur Verfügung zu stellen, das einen mehrschichtigen Aufbau der Wandung aufweist, mit einem Innenrohr, das das Lumen des Rohres begrenzt, aus einem sehr resistenten Polymermaterial, wie beispielsweise vernetztes Polyethylen (PE-X), einer darauf folgenden Haftvermittlerschicht, einer darauf folgenden Schicht aus einem Metall, wie beispielsweise Aluminium, welches die Diffusion von Stoffen durch die Wandung begrenzt oder verhindert, einer darauf folgenden Schicht eines weiteren, ggf. zum vorstehenden unterschiedlichen Haftvermittlers, und schließlich einer äußeren Schicht, die unter Verwendung der Polymerzusammensetzung gemäß vorliegender Erfindung gebildet ist.

### Ausführungsbeispiel der Erfindung

Ein Rohr aus vernetzten Polyethylen (PE-X), das vorzugsweise peroxidisch vernetzt ist (PE-Xa) weist eine Schicht der Stärke 1 mm auf seiner äußeren Oberfläche auf, die unter Verwendung der Polymerzusammensetzung gemäß vorliegender Erfindung gebildet ist. Die Schicht enthält Polymer der Komponente (A), das Polyethylen (PE) ist und Polymerpartikel der Komponente (B) aus vernetztem Polyethylen (PE-X).
Das Rohr weist eine außerordentlich feste Anbindung an aushärtende mineralische Massen auf.

Anwendung findet die Erfindung überall dort, wo Rohre oder Rohrformteile in aushärtenden mineralischen Massen eingebettet werden und wo eine verbesserte Anbindung der Oberfläche der Rohre oder Rohrformteile an diese Massen erwünscht oder erforderlich ist.

Dies betrifft beispielsweise Fußbodenheizungen bzw. Fußbodenkühlungen, Wand- oder Deckenheizungen und entsprechende Kühlungen, Betonkerntemperierungen, Rohrdurchführungen durch Wände, wie beispielsweise Hauseinführungen, Geothermiesonden, die vertikal oder schräg gebohrt sind, horizontale Erdkollektoren, thermisch aktivierte Tunnel- oder Schlitzwände, Fermenterheizungen, Industrierohranlagen, etc..

Die Erfindung wird anhand der beigefügten Figur näher erläutert.

Hierzu zeigt:

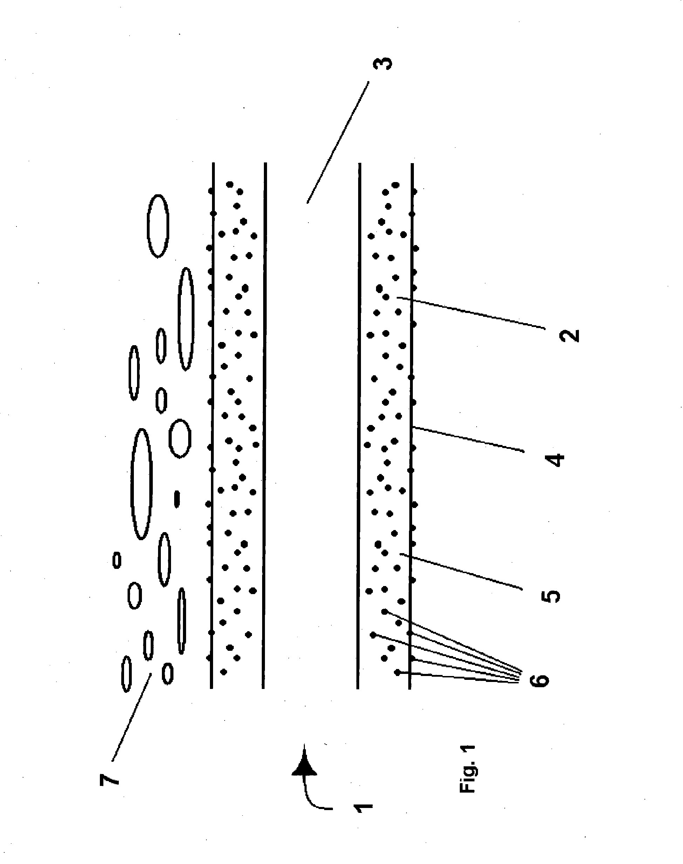

- Fig. 1: eine schematische Querschnittansicht eines Rohres gemäß vorliegender Erfindung.

In Fig. 1 ist ein Rohr 1 gemäß vorliegender Erfindung in einer schematischen Querschnittansicht gezeigt.

Das Rohr 1 ist hierbei von einer Wandung 2 gebildet, die ein Lumen 3 begrenzt.

Die Wandung 2 besteht aus Polymer 5, wobei das Polymer 5 Polymerpartikel 6 enthält, die in etwa homogen im Polymer 5 verteilt sind.
Die Wandung 2 stellt hierbei die Außenschicht des Rohres 1 dar.

Polymerpartikel 6 sind an der Oberfläche 4 der Wandung 2 des Rohres 1 derartig angeordnet, dass sie sich über die Oberfläche 4 nach außen hinaus erheben, also eine gewisse Rauigkeit der Oberfläche 4 der Wandung 2 an der Außenseite des Rohres 1 bewirken. Hierbei sind die Polymerpartikel 6 an der Oberfläche 4 der Wandung 2 des Rohres 1 fest im Polymer 5 eingebunden.

Weiterhin ist in der Fig.1 gezeigt, dass das Rohr 1 eingebettet ist in einer mineralischen Masse 7, die ausgehärtet ist, wobei die Oberfläche 4 spaltfrei an der mineralischen Masse 7 anliegt und mittels der Polymerpartikel 6, die an der Oberfläche 4 der Wandung 2 angeordnet sind, mit dieser Masse 7 eng verzahnt ist.

### Bezugszeichenliste

- 1: Rohr oder Rohrformteil
- 2: Wandung
- 3: Lumen
- 4: Oberfläche
- 5: Polymer
- 6: Polymerpartikel
- 7: mineralische ausgehärtete Masse

## Patentansprüche

1. Verwendung einer Polymerzusammensetzung, umfassend
(A) 55 Gewichtsteile bis 95 Gewichtsteile, bezogen auf das Gesamtgewicht der Komponenten (A) und (B), eines Polymers (5);
(B) 5 Gewichtsteile bis 45 Gewichtsteile Polymerpartikel (6), bezogen auf das Gesamtgewicht der Komponenten (A) und (B), mit einem mittleren Partikeldurchmesser von 10 µm bis 250 µm; und ggf.
(C) übliche Zusatzstoffe
zur Herstellung wenigstens einer Außenschicht einer Wandung (2) eines Rohres oder Rohrformteils (1), wobei die Polymerpartikel (6) an der Oberfläche (4) der Wandung (2) des Rohres oder Rohrformteils (1) derartig angeordnet sind, dass sie sich über die Oberfläche (4) nach außen hinaus erheben.

2. Verwendung nach Anspruch 1, **dadurch gekennzeichnet, dass** das Polymer (5) der Komponente (A) Polyethylen (PE) oder Polypropylen (PP) oder ein Copolymeres des Polyethylens (PE) oder des Polypropylens (PP) oder Ethylvinylalkohol (EVOH) oder ein Gemisch aus Ethylvinylalkohol (EVOH) und Polyethylen (PE) oder ein maleinsäureanhydrid-gepfropftes Polyethylen (PE-MAH) oder ein maleinsäureanhydrid-gepfropftes Polypropylen (PP-MAH) enthält oder ist.

3. Verwendung nach Anspruch 1 oder 2, **dadurch gekennzeichnet, dass** die Polymerpartikel (6) der Komponente (B) ultrahochmolekulares Polyethylen (PE-UHMW) oder vernetztes Polyethylen (PE-X) enthalten oder daraus bestehen.

4. Verwendung nach Anspruch 3, **dadurch gekennzeichnet, dass** die Polymerpartikel (6) der Komponente (B) in einer Menge von 10 Gewichtsteilen bis 30 Gewichtsteilen, bezogen auf das Gesamtgewicht der Komponenten (A) und (B), in der Polymer-Zusammensetzung enthalten sind.

5. Verwendung nach einem der Ansprüche 1 bis 4, **dadurch gekennzeichnet, dass** der mittlere Partikeldurchmesser der Polymerpartikel (6) der Komponente (B) 50 µm bis 200 µm, insbesondere 80 µm bis 150 µm, beträgt.

6. Rohr oder Rohrformteil (1) mit einer wenigstens aus einer Außenschicht gebildeten Wandung (2), geformt aus einer Polymerzusammensetzung, umfassend
(A) 55 Gewichtsteile bis 95 Gewichtsteile, bezogen auf das Gesamtgewicht der Komponenten (A) und (B), eines Polymers (5);
(B) 5 Gewichtsteile bis 45 Gewichtsteile Polymerpartikel (6), bezogen auf das Gesamtgewicht der Komponenten (A) und (B), mit einem mittleren Partikeldurchmesser von 10 µm bis 250 µm; und ggf.
(C) übliche Zusatzstoffe
wobei die Polymerpartikel (6) an der Oberfläche (4) der Wandung (2) des Rohres oder Rohrformteils (1) derartig angeordnet sind, dass sie sich über die Oberfläche (4) nach außen hinaus erheben.

7. Rohr oder Rohrformteil (1) nach Anspruch 6, **dadurch gekennzeichnet, dass** das Polymer (5) der Komponente (A) Polyethylen (PE) oder Polypropylen (PP) oder ein Copolymeres des Polyethylens (PE) oder des Polypropylens (PP) oder ultrahochmolekulares Polyethylen oder vernetztes Polyethylen (PE-X) oder Ethylvinylalkohol (EVOH) oder ein Gemisch aus Ethylvinylalkohol (EVOH) und Polyethylen (PE) oder ein maleinsäureanhydrid-gepfropftes Polyethylen (PE-MAH) oder ein maleinsäureanhydrid-gepfropftes Polypropylen (PP-MAH) enthält oder ist und/oder die Polymerpartikel (6) der Komponente (B) ultrahochmolekulares Polyethylen (PE-UHMW) oder vernetztes Polyethylen (PE-X) enthalten oder daraus bestehen.

8. Rohr oder Rohrformteil (1) nach Anspruch 6 oder 7, **dadurch gekennzeichnet, dass** die Polymerpartikel (6) der Komponente (B) in einer Menge von 5 Gewichtsteilen bis 45 Gewichtsteilen, bezogen auf das Gesamtgewicht der Komponenten (A) und (B), in der Polymer-Zusammensetzung enthalten sind.

9. Rohr oder Rohrformteil (1) nach Anspruch 8, **dadurch gekennzeichnet, dass** die Polymerpartikel (6) der Komponente (B) in einer Menge von 10 Gewichtsteilen bis 30 Gewichtsteilen, bezogen auf das Gesamtgewicht der Komponenten (A) und (B), in der Polymer-Zusammensetzung enthalten sind.

10. Rohr oder Rohrformteil (1) nach einem der Ansprüche 6 bis 9, **dadurch gekennzeichnet, dass** der mittlere Partikeldurchmesser der Polymerpartikel (6) der Komponente (B) 50 µm bis 200 µm, insbesondere 80 µm bis 150 µm, beträgt.

## Claims

1. Use of a polymer composition comprising
(A) from 55 parts by weight to 95 parts by weight, based on the total weight of components (A) and (B), of a polymer (5);
(B) from 5 parts by weight to 45 parts by weight of polymer particles (6), based on the total weight of components (A) and (B), with average particle diameter from 10 µm to 250 µm; and optionally
(C) conventional additives
for the production of at least an external layer of a wall (2) of a pipe or pipe moulding (1), wherein the arrangement of the polymer particles (6) at the surface (4) of the wall (2) of the pipe or pipe moulding (1) is such that they protrude externally beyond the surface (4).

2. Use according to Claim 1, **characterized in that** the polymer (5) of component (A) comprises, or is, polyethylene (PE) or polypropylene (PP) or a polyethylene (PE) copolymer or a polypropylene (PP) copolymer or ethylene-vinyl alcohol (EVOH) or an ethylene-vinyl alcohol (EVOH)/polyethylene (PE) mixture or a maleic-anhydride-grafted polyethylene (MAHPE) or a maleic-anhydride-grafted polypropylene (MAHPP).

3. Use according to Claim 1 or 2, **characterized in that** the polymer particles (6) of component (B) comprise, or consist of, ultra-high-molecular-weight polyethylene (UHMWPE) or crosslinked polyethylene (XPE).

4. Use according to Claim 3, **characterized in that** the quantity of the polymer particles (6) of component (B) present in the polymer composition is from 10 parts by weight to 30 parts by weight, based on the total weight of components (A) and (B).

5. Use according to any of Claims 1 to 4, **characterized in that** the average diameter of the polymer particles (6) of component (B) is from 50 µm to 200 µm, in particular from 80 µm to 150 µm.

6. Pipe or pipe moulding (1) with, formed at least from an external layer, a wall (2), moulded from a polymer composition comprising
(A) from 55 parts by weight to 95 parts by weight, based on the total weight of components (A) and (B), of a polymer (5);
(B) from 5 parts by weight to 45 parts by weight of polymer particles (6), based on the total weight of components (A) and (B), with average particle diameter from 10 µm to 250 µm; and optionally
(C) conventional additives,
where the arrangement of the polymer particles (6) at the surface (4) of the wall (2) of the pipe or pipe moulding (1) is such that they protrude externally beyond the surface (4).

7. Pipe or pipe moulding (1) according to Claim 6, **characterized in that** the polymer (5) of component (A) comprises, or is, polyethylene (PE) or polypropylene (PP) or a polyethylene (PE) copolymer or a polypropylene (PP) copolymer or ultra-high-molecular-weight polyethylene or crosslinked polyethylene (XPE) or ethylene-vinyl alcohol (EVOH) or an ethylene-vinyl alcohol (EVOH)/polyethylene (PE) mixture or a maleic-anhydride-grafted polyethylene (MAHPE) or a maleic-anhydride-grafted polypropylene (MAHPP), and/or the polymer particles (6) of component (B) comprise, or consist of, ultra-high-molecular-weight polyethylene (UHMWPE) or crosslinked polyethylene (XPE).

8. Pipe or pipe moulding (1) according to Claim 6 or 7, **characterized in that** the quantity of the polymer particles (6) of component (B) present in the polymer composition is from 5 parts by weight to 45 parts by weight, based on the total weight of components (A) and (B).

9. Pipe or pipe moulding (1) according to Claim 8, **characterized in that** the quantity of the polymer particles (6) of component (B) present in the polymer composition is from 10 parts by weight to 30 parts by weight, based on the total weight of components (A) and (B).

10. Pipe or pipe moulding (1) according to any of Claims 6 to 9, **characterized in that** the average diameter of the polymer particles (6) of component (B) is from 50 µm to 200 µm, in particular from 80 µm to 150 µm.

## Revendications

1. Utilisation d'une composition polymère, comprenant :
(A) 55 parties en poids à 95 parties en poids, par rapport au poids total des composants (A) et (B), d'un polymère (5) ;
(B) 5 parties en poids à 45 parties en poids de particules polymères (6), par rapport au poids total des composants (A) et (B), ayant un diamètre de particule moyen de 10 µm à 250 µm ; et éventuellement
(C) des additifs usuels,
pour la fabrication d'au moins une couche extérieure d'une paroi (2) d'un tube ou d'une pièce moulée tubulaire (1), les particules polymères (6) étant agencées sur la surface (4) de la paroi (2) du tube ou de la pièce moulée tubulaire (1) de sorte qu'elles s'élèvent au-dessus de la surface (4) vers l'extérieur.

2. Utilisation selon la revendication 1, **caractérisée en ce que** le polymère (5) du composant (A) contient ou est le polyéthylène (PE) ou le polypropylène (PP) ou un copolymère de polyéthylène (PE) ou de polypropylène (PP) ou l'alcool éthylènevinylique (EVOH) ou un mélange d'alcool éthylènevinylique (EVOH) et de polyéthylène (PE), ou un polyéthylène à greffage anhydride d'acide maléique (PE-MAH) ou un polypropylène à greffage anhydride d'acide maléique (PP-MAH).

3. Utilisation selon la revendication 1 ou 2, **caractérisée en ce que** les particules polymères (6) du composant (B) contiennent ou sont constituées par du polyéthylène de poids moléculaire ultra-élevé (PE-UHMW) ou du polyéthylène réticulé (PE-X).

4. Utilisation selon la revendication 3, **caractérisée en ce que** les particules polymères (6) du composant (B) sont contenues en une quantité de 10 parties en poids à 30 parties en poids, par rapport au poids total des composants (A) et (B), dans la composition polymère.

5. Utilisation selon l'une quelconque des revendications 1 à 4, **caractérisée en ce que** le diamètre de particule moyen des particules polymères (6) du composant (B) est de 50 µm à 200 µm, notamment de 80 µm à 150 µm.

6. Tube ou pièce moulée tubulaire (1) comprenant une paroi (2) formée d'au moins une couche extérieure, façonné à partir d'une composition polymère comprenant :
(A) 55 parties en poids à 95 parties en poids, par rapport au poids total des composants (A) et (B), d'un polymère (5) ;
(B) 5 parties en poids à 45 parties en poids de particules polymères (6), par rapport au poids total des composants (A) et (B), ayant un diamètre de particule moyen de 10 µm à 250 µm ; et éventuellement
(C) des additifs usuels,
les particules polymères (6) étant agencées sur la surface (4) de la paroi (2) du tube ou de la pièce moulée tubulaire (1) de sorte qu'elles s'élèvent au-dessus de la surface (4) vers l'extérieur.

7. Tube ou pièce moulée tubulaire (1) selon la revendication 6, **caractérisé en ce que** le polymère (5) du composant (A) contient ou est le polyéthylène (PE) ou le polypropylène (PP) ou un copolymère de polyéthylène (PE) ou de polypropylène (PP) ou le polyéthylène de poids moléculaire ultra-élevé ou le polyéthylène réticulé (PE-X) ou l'alcool éthylènevinylique (EVOH) ou un mélange d'alcool éthylènevinylique (EVOH) et de polyéthylène (PE), ou un polyéthylène à greffage anhydride d'acide maléique (PE-MAH) ou un polypropylène à greffage anhydride d'acide maléique (PP-MAH) et/ou les particules polymères (6) du composant (B) contiennent ou sont constituées par du polyéthylène de poids moléculaire ultra-élevé (PE-UHMW) ou du polyéthylène réticulé (PE-X).

8. Tube ou pièce moulée tubulaire (1) selon la revendication 6 ou 7, **caractérisé en ce que** les particules polymères (6) du composant (B) sont contenues en une quantité de 5 parties en poids à 45 parties en poids, par rapport au poids total des composants (A) et (B), dans la composition polymère.

9. Tube ou pièce moulée tubulaire (1) selon la revendication 8, **caractérisé en ce que** les particules polymères (6) du composant (B) sont contenues en une quantité de 10 parties en poids à 30 parties en poids, par rapport au poids total des composants (A) et (B), dans la composition polymère.

10. Tube ou pièce moulée tubulaire (1) selon l'une quelconque des revendications 6 à 9, **caractérisé en ce que** le diamètre de particule moyen des particules polymères (6) du composant (B) est de 50 µm à 200 µm, notamment de 80 µm à 150 µm.
